# EUROPÄISCHE PATENTSCHRIFT

(11) **EP 2 252 735 B1**
(45) Veröffentlichungstag und Bekanntmachung des Hinweises auf die Patenterteilung: **03.06.2020**
(21) Anmeldenummer: 09712574.4
(22) Anmeldetag: 20.02.2009
(51) Int. Cl.: D06F 58/02, D06F 58/24

(54) **HAUSGERÄT ZUM TROCKNEN VON WÄSCHE, WELCHES EIN VON PROZESSLUFT UMSTRÖMBARES BAUTEIL AUFWEIST**
HOME DEVICE FOR DRYING LAUNDRY COMPRISING A COMPONENT AROUND WHICH PROCESS AIR CAN FLOW
APPAREIL MÉNAGER POUR LE SÉCHAGE DE LINGE, PRÉSENTANT UN ÉLÉMENT AUTOUR DUQUEL PEUT CIRCULER DE L'AIR DE TRAITEMENT

(30) Priorität: 22.02.2008 DE 102008010517
(43) Veröffentlichungstag der Anmeldung: 24.11.2010
(73) Patentinhaber: BSH Hausgeräte GmbH, 81739 München (DE)
(72) Erfinder: GRUNERT, Klaus, 13465 Berlin (DE); NÜHSE, Werner, 14624 Dallgow-Döberitz (DE); STEFFENS, Günter, 14624 Dallgow-Döberitz (DE); ZIEMANN, Andreas, 14469 Potsdam (DE)
(86) Internationale Anmeldenummer: PCT/EP2009/052028
(87) Internationale Veröffentlichungsnummer: WO 2009/103785

(56) Entgegenhaltungen:
- EP-A1- 1 736 591
- EP-A1- 2 154 467
- EP-A2- 0 128 514
- WO-A-01/64801
- WO-A-2007/093461
- WO-A-2007/093467
- WO-A-2007/093468
- DE-A1- 10 330 744
- DE-A1-102007 015 450
- DE-U1-202004 007 070
- JP-A- 2002 233 692
- US-A- 4 640 344
- US-A- 5 806 204
- US-A1- 2007 051 009

## Beschreibung

Die Erfindung betrifft ein Hausgerät zum Trocknen von Wäsche, welches ein von Prozessluft umströmbares Bauteil aufweist, wobei das Bauteil ein Substrat aus Metall hat, welches eine der Prozessluft zugewandte Oberfläche aufweist.

Ein solches Hausgerät, ausgestaltet als Wäschetrockner zum Trocknen von Wäsche, geht hervor aus jedem der Patentdokumente WO 2007/093461 A1, WO 2007/093467 A1 und WO 2007/093468 A1. Dieses Hausgerät ist jeweils ausgestaltet als Wäschetrockner zum Trocknen feuchter Wäsche. Es enthält eine als drehbare Trommel ausgestaltete Trockenkammer zum Aufnehmen der feuchten Wäsche und einen Prozessluftkreislauf, in welchen die Trocknungskammer einbezogen ist und in welchem ein Strom von Prozessluft umläuft. Vor dem Eintritt in die Trocknungskammer wird die Prozessluft durch eine Wärmequelle erhitzt, so dass sie von der Wäsche, welche in der Trocknungskammer bewegt wird, Feuchtigkeit aufnehmen kann. Nach ihrem Durchgang durch die Trocknungskammer gelangt die mit Feuchtigkeit beladene Prozessluft zunächst zu einem Flusenfilter, in welchem feinteilige Fasern, die die Prozessluft von der Wäsche mitführt, zum überwiegenden Teil aufgefangen werden. Anschließend gelangt sie zu einer Wärmesenke, wo sie abgekühlt wird. Bei dieser Abkühlung scheidet sich die von der Prozessluft abgeführte Feuchtigkeit als Kondensat aus der Prozessluft aus. Das Kondensat wird von der Prozessluft abgetrennt sowie zur späteren Entsorgung gespeichert. Von der Wärmesenke gelangt die Prozessluft zurück zur Wärmequelle, um dort erneut erhitzt und wieder zur Trockenkammer geleitet zu werden. Wenn auch der Flusenfilter einen überwiegenden Teil der Flusen auffängt und festhält, so ist doch auch die Wärmesenke merklich durch feinste Flusen, welcher der Flusenfilter nicht festhalten kann, belastet. Die Belastung ist umso höher, als die Flusen sich auf der Prozessluft zugewandten Oberfläche der Wärmesenke niederschlagen und dort mehr oder weniger festkleben, wozu das flüssige Kondensat, welches in der Wärmesenke anfällt, wesentlich beiträgt.

Ein Bauteil für ein Hausgerät in Form eines Luft-Luft-Wärmetauschers geht hervor aus der DE 20 2004 007 070 U1. Dieser Wärmetauscher ist aufgebaut mit Rohren aus einem Kunststoff wie Polypropylen, durch welche mit Flusen und Feuchtigkeit belastete Prozessluft strömen soll. Die entsprechend ausgesetzten Innenseiten der Rohre können mit einer antiadhäsiven oder hydrophoben Mikrostruktur oder Beschichtung versehen sein, damit sie gegen Verschmutzungen unempfindlicher sind.

Wenn die Wärmesenke als Luft-Luft-Wärmetauscher ausgebildet ist, wobei ein in einem offenen Kanal geführter Strom von Kühlluft, die einer Umgebung des Hausgerätes entnommen und in diese wieder zurückgeführt wird, die Wärme aus der Prozessluft aufnimmt, dann ist der Luft-Luft-Wärmetauscher in der Regel derart ausgebildet, dass er nach Beendigung eines Trocknungsprozesses, oder jeweils nach einer gewissen Vielzahl von Trocknungsprozessen, leicht und ohne Benutzung besonderen Werkzeuges dem Hausgerätes entnommen und gereinigt werden kann. Diese Reinigung kann durch einfaches Abspülen mit Wasser erfolgen. Wenn aber die Wärmesenke Teil einer Wärmepumpe ist, in welcher die der Prozessluft in der Wärmesenke entnommene Wärme zur Wärmequelle gepumpt und dort der Prozessluft wieder zugeführt wird, dann ist es in der Regel nicht mehr möglich, die Wärmesenke so auszubilden, dass sie von einem normalen Benutzer ohne Weiteres entnommen werden kann. Die in den drei genannten Dokumenten erwähnte Wärmepumpe des Kompressor-Typs verbindet die Wärmesenke und die Wärmequelle in einem Wärmetransportkreislauf, in welchem ein Arbeitsmittel zirkuliert, welches Arbeitsmittel insbesondere ein fluorierter Kohlenwasserstoff ist. Es fließt der Wärmesenke in flüssiger Form zu und wird dort verdampft, wozu es Wärme aus der Prozessluft aufnimmt. In verdampfter Form gelangt es zu einem Kompressor, wo es komprimiert und zur Wärmequelle weiterbefördert wird. Dort verflüssigt es sich, indem es Wärme an die Prozessluft abgibt. Hinter der Wärmequelle gelangt das Arbeitsmittel zu einer Drossel, welche ein Ventil, eine Blende oder eine Kapillare sein kann, wo sein Innendruck und seine Temperatur herabgesetzt werden, und von dort wieder zur Wärmesenke, womit der Kreislauf geschlossen ist. Um ein langfristiges Funktionieren dieses Kreislaufs sicher zu stellen, muss er praktisch vollständig abgeschlossen sein. Es entspricht herkömmlicher Praxis, alle Komponenten dieses Kreislaufs durch Löten miteinander zu verbinden. Ein Herauslösen der Wärmesenke aus diesem Kreislauf, was eine Voraussetzung für das Entnehmen der Wärmesenke aus dem Hausgerät wäre, ist damit für den einfachen Benutzer des Hausgerätes nicht mehr möglich. Gleiches gilt dann, wenn die Wärmepumpe eine thermoelektrische Wärmepumpe ist. Eine thermoelektrische Wärmepumpe, welche den bekannten Peltier-Effekt zunutze macht, ist gemäß üblicher Praxis eine kompakte Baueinheit aus zwei Wärmetauschern, nämlich der Wärmesenke einerseits und der Wärmequelle andererseits, zwischen denen die sog. Peltier-Elemente, in welchen der zum Pumpen der Wärme genutzte Peltier-Effekt durch elektrischen Strom hervorgerufen wird, eingespannt sind. Auch in dieser Wärmepumpe ist ein Herauslösen der Wärmesenke nicht möglich. Will man also bei einem Hausgerät mit Wärmepumpe die Wärmesenke von Flusen befreien, so muss man andere Mittel vorsehen. Die drei erwähnten Dokumente zeigen die Möglichkeiten auf, die Wärmesenke mittels Bürsten und zusätzlich eingesetzter Flüssigkeit zu reinigen.

Die Erfindung bezieht sich nicht nur auf Hausgeräte zum Trocknen von Wäsche in Form der beschriebenen Wäschetrockner, sondern auch auf Hausgeräte, in welchem sowohl das Waschen als auch das Trocknen von Wäsche möglich ist. Diese Hausgeräte sind bekannt als "Waschtrockner". Es kommt nicht unbedingt darauf an, ob die in einem solchen Hausgerät vorhandene Wärmesenke eine Komponente einer Wärmepumpe ist oder nicht.

Aus der DE 103 30 744 A1 geht ein Beschichtungssystem auf der Basis hydrolysierbarer Silane mit großen Hydrolysegeschwindigkeiten hervor. Dieses Beschichtungssystem soll sich eignen zur Herstellung funktioneller Beschichtungen mit verschiedenen Eigenschaften, insbesondere der Eigenschaft, leicht reinigbar zu sein, und dabei zusätzlich eine hohe Kratzfestigkeit aufzuweisen und für Substrate aus Glas, Keramik, Metall, Stein und Kunststoff geeignet zu sein. Die Basis einer Beschichtung, die mit einem derartigen Beschichtungssystem erzeugt wird, ist ein sog. Polysiloxanharz. Ein in der genannten Schrift als "Beispiel 2" beschriebenes Beschichtungssystem ist geeignet zur Herstellung einer hydrophoben Easy-to-Clean-Beschichtung mit einer sehr geringen Oberflächenenergie, auf Grund derer Schmutz und Flüssigkeiten nur schwach an der Beschichtung haften können. Die beschichtete Oberfläche verschmutzt dadurch nicht stark und ist leicht zu reinigen. Voraussetzung für die dauernde Anhaftung und Beständigkeit dieser Beschichtung ist allerdings eine Wärmebehandlung bei einer Temperatur oberhalb von 200°C, welche die Anwendbarkeit der Beschichtung nur auf entsprechend belastbare Substrate, insbesondere metallische, beschränkt.

Weitere Beispiele für Easy-to-Clean-Beschichtungen gehen hervor aus dem Dokument WO 2001/064 801 A1, welches ebenfalls Beschichtungssysteme auf der Grundlage von Polysiloxanharzen zeigt. Dazu ist im Besonderen zu verweisen auf die als "Example 2B", "Example 9", "Example 34", "Example 39" und "Example 40" bezeichneten Ausführungsbeispiele. In jedem Fall wird eine Beschichtung erzeugt, die die Oberfläche schmutzabweisend macht, die kratzfest und teilweise auch hochtemperaturbeständig ist. Als Anwendungsbeispiele in oder an einem privaten Haushalt werden der Schutz von Mauerwerk vor unerwünschter Bemalung (Graffiti) sowie die schützende, korrosionsfeste und Anhaftungen verhindernde Beschichtung von Kochgeschirren, Öfen und anderen Gerätschaften genannt.

Die EP 1 736 591 A1 beschreibt einen Wärmetauscher für einen Wäschetrockner. Es soll damit eine Wärmetauscherstruktur bereitgestellt werden, welche in der Lage ist, die Effizienz des Wärmeaustauschs zu erhöhen. Eine Beschichtung des Wärmetauschers ist nicht beschrieben.

Die DE 103 30 744 A1 beschreibt eine Beschichtungszusammensetzung auf der Basis hydrolysierbarer Silane zur Herstellung von Beschichtungen mit leicht zu reinigenden oder beschlagshemmenden Oberflächen, wobei die Beschichtungszusammensetzung mindestens eine hydrolysierbare Siliziumverbindung einer bestimmten allgemeinen Formel enthält. Mit einem derartigen Beschichtungssystem soll die Herstellung funktioneller Schichten auf unterschiedlichsten Substraten wie Glas, Keramik, Metall, Stein oder Kunststoff möglich sein, wobei der Auftrag der Beschichtungszusammensetzung mit allen gängigen Auftragsmethoden wie beispielsweise Tauchen, Fluten oder Sprühen erfolgen kann. Schließlich sollen je nach Art weiterer zugegebener Bestandteile Beschichtungen hergestellt werden können, die entweder über eine Easy-to-clean-Oberfläche mit einer sehr niedrigen Oberflächenenergie oder aber über eine hydrophile und somit beschlagverhindernde Oberfläche verfügen.

Eine Aufgabe vorliegender Erfindung besteht darin, das Hausgerät der eingangs genannten Gattung so weiterzubilden, dass eine Verbesserung hinsichtlich der Entfernung von Flusen und anderen Fremdpartikeln an einem von Prozessluft umströmbaren Bauteil, insbesondere einer Wärmesenke, erreicht wird.

Zur Lösung dieser Aufgabe angegeben wird ein Hausgerät gemäß dem unabhängigen Patentanspruch. Bevorzugte Weiterbildungen dieses Hausgeräts sind in den abhängigen Patentansprüchen aufgeführt.

Das erfindungsgemäße Hausgerät zum Trocknen von Wäsche, welches ein von Prozessluft umströmbares Bauteil aufweist, wobei das Bauteil ein Substrat aus Metall hat, welches einer der Prozessluft zugewandte Oberfläche aufweist, zeichnet sich dadurch aus, dass die Oberfläche eine eine Anhaftung eines Fremdpartikels vermeidende Beschichtung trägt, wobei die Beschichtung eine Oberflächenenergie von höchstens 40 mN/m aufweist.

Erfindungsgemäß ist damit ein Hausgerät geschaffen, in welchem ein einer Belastung durch Fremdpartikel, insbesondere Flusen, aussetzbares Bauteil durch eine besondere Beschichtung vor unerwünschtem Anhaften der Fremdpartikel geschützt ist. Die Erfindung macht sich dabei insbesondere, jedoch nicht ausschließlich, die vorteilhaften Eigenschaften der für andere Zwecke bekannten Beschichtungen auf der Grundlage von Polysiloxanharzen zunutze. Solche Beschichtungen sind sehr dünn und zugleich kratzfest, also mechanisch hoch belastbar; sie beeinträchtigen die ggf. funktionsnotwendige Wärmeleitfähigkeit des Bauteils nicht wesentlich und sind auch üblichen Reinigungsmaßnahmen zugänglich, ohne dass eine Beeinträchtigung ihrer selbst befürchtet werden müsste.

Die Beschichtung weist erfindungsgemäß eine Oberflächenenergie auf, welche höchstens 40 Millinewton pro Meter aufweist. Eine solche Oberflächenenergie kann gemessen werden durch Auftropfen besonderer Tinten; dies sind pigmentierte Flüssigkeiten mit speziellen Eigenschaften, aus deren Verhalten auf der zu untersuchenden Oberfläche auf deren Oberflächenenergie geschlossen werden kann. Dabei ist das entscheidende Kriterium, ob ein Tropfen einer solchen Tinte auf der Oberfläche verläuft oder sich als mehr oder weniger kugelförmiger Tropfen auf der Oberfläche hält.

Es ist anzumerken, dass die erfindungsgemäße Beschichtung mit einer solcherart geringen Oberflächenenergie nicht einfach durch Beschichten der zu schützenden Oberfläche mit einem entsprechend verfügbaren flüssigen Präparat und mehr oder weniger einfaches Auftrocknenlassen dieses Präparats erzielbar ist. Erfahrungsgemäß ist eine sorgfältige und intensive Wärmebehandlung des beschichteten Bauteils erforderlich, um eine zur Erzielung der gewünschten Wirkung erforderliche Ausrichtung entsprechender Komponenten der Beschichtung zu bewirken. Diese Wärmebehandlung dient auch dazu, der Beschichtung eine über die sinnvollerweise zu erwartende Lebenszeit des Bauteils und des Hausgeräts stabile Haftung auf der Oberfläche und Beständigkeit gegen die über die Lebenszeit zu erwartenden Belastungen zu verleihen. Eine Abschätzung der Belastbarkeit der Beschichtung über die Lebensdauer kann erzielt werden, indem die Beschichtung bei einer Temperatur von 70°C einer Atmosphäre mit 100% relativer Luftfeuchtigkeit über 1250 Stunden ausgesetzt wird. Erfahrungsgemäß hat eine entsprechende Wärmebehandlung der Beschichtung zu erfolgen bei einer Temperatur um 250°C, was die Anwendung auf Bauteile aus herkömmlichem Kunststoff jedenfalls ausschließt.

Bevorzugt ist eine Ausgestaltung des Hausgerätes, bei welcher die Beschichtung eine Oberflächenenergie von höchstens 30 Millinewton pro Meter, aufweist.

Besonders bevorzugt ist dabei eine Beschichtung, die ein Polysiloxanharz enthält, wobei dieses Polysiloxanharz insbesondere ein polyestermodifiziertes Methyl-Phenyl-Polysiloxanharz ist. Die Beschichtung mit Polysiloxanharz ist insbesondere eine Beschichtung, welche herkömmlich auf Kochgeschirren als Antihaftschicht und auf anderen, thermisch hoch belasteten Gebrauchsgegenständen zu dekorativen Zwecken eingesetzt wird. Weiter bevorzugt sind in der Beschichtung keramische Partikel mit einer Größe von höchstens 50 Nanometern suspendiert. Dabei werden unter keramischen Partikeln Partikel aus im Wesentlichen inerten Oxiden, Hydroxiden und dergleichen verstanden; in Betracht kommen insbesondere Siliciumdioxid, Calciumhydroxid und Aluminiumoxid nebst Derivaten wie Böhmit. Ebenfalls besonders bevorzugt ist eine Beschichtung, die eine Dicke zwischen 1 Mikrometer und 50 Mikrometern, noch mehr bevorzugt zwischen 1 Mikrometer und 5 Mikrometern, aufweist.

Es ist anzumerken, dass die Beschichtung jedenfalls dann, wenn sie durch Tauchen oder einen diesem vergleichbaren Prozess aufgebracht wird, aufgrund eines sogenannten "Kanteneffekts" an Kanten dicker als auf der Oberfläche abseits der Kanten wird. Bei einer Dicke zwischen 1 µm und 5 µm abseits der Kanten kann an den Kanten eine Dicke zwischen 10 µm und 20 µm entstehen. Dies wäre vorliegend durchaus von Vorteil, da auf diese Weise beim Schneiden der Komponenten entstandene verformte Spitzen an solchen Kanten vollständig eingehüllt werden und somit keine Anhaftungspunkte für Tropfen und Flusen mehr bilden können.

Weiterhin bevorzugt ist eine Beschichtung, in welcher ein Pigment, das ist ein Farbstoff, suspendiert ist, wobei zusätzlich bevorzugt das Pigment so ausgewählt ist, dass es unter Bestrahlung mit ultraviolettem Licht in sichtbarem Licht fluoresziert. Auf diese Weise kann im Anschluss an einen Beschichtungsvorgang verifiziert werden, ob das Bauteil so beschichtet ist, wie dies gewünscht war.

Erfindungsgemäß ist die Oberfläche vollständig von der Beschichtung bedeckt - jedenfalls so weit vollständig, dass sie überall dort, wo sie von der Prozessluft beaufschlagbar ist, bedeckt ist. Diese Bedeckung umfasst weiter auch allfällig vorhandene Kanten in dem Substrat, so dass auch jede Kante vollständig von der Beschichtung bedeckt ist.

Die Oberfläche, die die Beschichtung trägt, muss dabei nicht notwendigerweise der kompletten Oberfläche der Wärmesenke entsprechen. Die Beschichtung kann beschränkt werden auf einen solchen Teil der kompletten Oberfläche, welcher von der Prozessluft mehr oder weniger unmittelbar beaufschlagt, insbesondere direkt angeströmt wird. Dieser Teil ist hinsichtlich der Ablagerung von Fremdpartikeln vor allem gefährdet; im Sinne einer Einsparung von Beschichtungsmaterial kann somit die Beschichtung auf diesen besonders gefährdeten Bereich beschränkt werden. Bei einer Anwendung in einem Hausgerät, welches ein Wäschetrockner ist, kann der mit der Beschichtung zu versehende Teil der Wärmesenke insbesondere derjenige Teil sein, welcher sich ausgehend von einer der anströmenden Prozessluft direkt zugewandten Vorderseite über eine Länge zwischen 5 mm und 25 mm, insbesondere etwa 20 mm, in Strömungsrichtung der Prozessluft entlang der Wärmesenke erstreckt.

Je nach Anwendungsfall kann es vorteilhaft sein, entsprechende Komponenten der Wärmesenke, beispielsweise Lamellenbleche und dergleichen, vor ihrer Verarbeitung und ihrem Einbau in die Wärmesenke mit der Beschichtung zu versehen. Dabei müssen unter Umständen insbesondere unbeschichtete Schnittkanten und dergleichen in Kauf genommen werden, was zwar eine Einbuße an Wirksamkeit bedingt, im Hinblick auf die im Sinne einer Vereinfachung der Herstellung erreichten Vorteile aber noch günstig sein kann.

Bei dem erfindungsgemäßen Hausgerät ist die beschichtete Oberfläche des Bauteils aus zumindest einem Werkstoff ausgewählt aus der Gruppe umfassend Kupfer, Aluminium, Eisenwerkstoffe sowie Kupferlote und Silberlote gebildet.

Ebenfalls besonders bevorzugt ist das erfindungsgemäße Hausgerät ausgebildet als Trockner für Wäsche, d.h. insbesondere als Wäschetrockner oder Waschtrockner. Dabei ist besonders vorzugsweise das Bauteil eine Wärmesenke, wobei diese Wärmesenke insbesondere ein Teil einer Wärmepumpe ist. Das Bauteil kann in diesem Zusammenhang unlösbar in dem Hausgerät verankert sein, wobei die Reinigung des Bauteils von unerwünschten Fremdpartikeln wie Flusen durch eine entsprechend vorgesehene Reinigungseinrichtung und insbesondere automatisiert erfolgen kann.

Neben einem in besonderer Weise funktionswichtigen Bauteil wie einer Wärmesenke, kann im Prinzip jedes für eine Verschmutzung mit Fremdpartikeln in Frage kommende Bauteil eines gattungsgemäßen Hausgerätes mit einer Beschichtung geschützt werden. Somit kommt erfindungsgemäß insbesondere jedes Bauteil für einen Prozessluftkanal, durch welchen die mit Feuchtigkeit und Flusen beladene Prozessluft fließt, in Betracht.

Ein Ausführungsbeispiel der Erfindung wird nachfolgend erläutert.

Das nachfolgend zu betrachtende Hausgerät ist ein Wäschetrockner mit einer Trocknungskammer und einem geschlossenen Prozessluftkreislauf, in welchen die Trocknungskammer einbezogen ist und in welchem eine Wärmepumpe mit einer Wärmesenke und einer Wärmequelle zum wechselweisen Abkühlen und Aufheizen der zirkulierenden Prozessluft vorgesehen ist. Die beiden als Wärmesenke und Wärmequelle fungierenden Wärmetauscher sind jeweils ausgebildet als mäandrierende Rohrsysteme, welche aus einzelnen Kupferrohren und Rohrbögen zusammen gelötet und in übereinander angeordneten Lamellen gehaltert sind. Diese Lamellen sind dünne Blechstreifen aus Aluminium und dienen dem verbesserten Transfer von Wärme zwischen dem in den Rohrsystemen fließenden Arbeitsmittel und der die Rohrsysteme umströmenden Prozessluft. Zum Zusammenbau der Komponenten finden bedarfsweise herkömmliche Kupfer- oder Silberlote zum Hartlöten von Kupferteilen sowie Halterungen, Schrauben und dergleichen aus Eisen- oder Messingwerkstoffen Verwendung. Die Wärmesenke und die Wärmequelle werden in dieser Form vorfabriziert und anschließend in das Hausgerät eingesetzt, und der Arbeitsmittelkreislauf durch Verlöten der Wärmesenke und der Wärmequelle mit weiteren Leitungsrohren für das Arbeitsmittel geschlossen.

Vor dem Einsetzen in das Hausgerät wird der die Wärmesenke darstellende Wärmetauscher mit einer gegen Anhaftung von Fremdpartikeln resistenten Beschichtung versehen. Zu diesem Zweck wird er eingetaucht in eine Zubereitung, die unter der Bezeichnung "NP AS 10" von der ItN Nanovation AG in Saarbrücken vermarktet wird. Diese ist eine Auflösung eines polyestermodifizierten Methyl-Phenyl-Polysiloxanharzes in Kombination mit Trennsubstanz (die ihrerseits nanokristalline keramische Partikel enthält) in einem organischen Lösungsmittel. Sie ist eigentlich gedacht für Beschichtungen, welche herkömmlich auf Kochgeschirren als Antihaftschicht oder auf anderen, thermisch hoch belasteten Gebrauchsgegenständen wie Gaskochern zu dekorativen Zwecken eingesetzt werden. Der Zubereitung ist ein Pigment beigefügt, welches unter Bestrahlung mit ultraviolettem Licht in sichtbarem Licht fluoresziert. Die Zubereitung ist eine leicht viskose und geringfügig milchige Flüssigkeit, welche durch Eintauchen des Wärmetauschers auf diesen aufgebracht wird. Dabei wird der Wärmetauscher einschließlich aller Kanten, insbesondere aller Kanten der Lamellen, von der Beschichtung überzogen. Das vollständige Überziehen des Wärmetauschers mit der Beschichtung wird nachgewiesen, indem der beschichtete Wärmetauscher mit ultraviolettem Licht beleuchtet wird, so dass das Pigment, welches der Zubereitung beigemischt war, in sichtbarem Licht fluoresziert. Der Nachweis, dass alle erwünschten Bereiche des Wärmetauschers mit der Beschichtung überzogen sind, erfolgt durch die Feststellung, dass alle diese Bereiche unter Beleuchtung mit ultraviolettem Licht in sichtbarem Licht aufleuchten.

Wahlweise kann die Beschichtung kann über den gesamten Wärmetauscher erstreckt oder auf denjenigen Teil, welcher im Betrieb von der Prozessluft direkt angeströmt wird, beschränkt werden. In jedem Fall aber soll die Beschichtung das entsprechende Substrat einschließlich aller eventuell vorhandenen Kanten etc. vollständig und ohne wesentliche Lücken bedecken.

Für die Beschichtung wird eine Dicke zwischen 1 Mikrometer und 5 Mikrometern angestrebt; die Dicke der Beschichtung kann eingestellt werden über den Anteil von verdunstbarem Lösungsmittel in der Zubereitung. Die Dicke dieser Beschichtung ist insbesondere mittels Rasterelektronenmikroskopie messbar. Sofern eine Dicke im genannten Bereich nicht erreichbar ist, kann gegebenenfalls auch eine Dicke von höchstens 50 Mikrometern akzeptiert werden. Es ist auch hier anzumerken, dass die Beschichtung aufgrund eines sogenannten "Kanteneffekts" an Kanten ohnehin dicker als auf der Oberfläche abseits der Kanten wird. Bei einer Dicke zwischen 1 µm und 5 µm abseits der Kanten kann an den Kanten eine Dicke zwischen 10 µm und 20 µm entstehen. Dies ist vorliegend durchaus von Vorteil, da auf diese Weise beim Schneiden entstandene verformte Spitzen an solchen Kanten vollständig eingehüllt werden und somit keine Anhaftungspunkte für Tropfen und Flusen mehr bilden können.

Nach dem Beschichten wird der beschichtete Wärmetauscher in einem Ofen erhitzt, und zwar bei 250 Grad Celsius für 30 Minuten oder bei 270 Grad Celsius für 20 Minuten. Die dadurch erzeugte feste Beschichtung haftet fest auf dem Wärmetauscher und zeichnet sich aus durch eine geringe Oberflächenenergie von höchstens 30 Millinewton pro Meter; sie weist damit eine hervorragende Resistenz gegen das Anhaften von Flusen auf. Flusen, die sich während des Betriebs des Hausgerätes auf der beschichteten Wärmesenke absetzen, entwickeln allenfalls eine nur sehr schwache Bindung an die Oberfläche der Wärmesenke und können deshalb mit einfachen Mitteln, insbesondere durch Übergießen mit Wasser, entfernt werden. Damit wird insbesondere die Zuverlässigkeit eines automatisiertem Reinigungssystems für die Wärmesenke wesentlich erhöht, und es wird auch über einen langen Zeitraum ein stabiler und von unerwünschten Ablagerungen unbeeinträchtigter Betrieb der Wärmesenke und somit des gesamten Hausgeräts gesichert.

## Patentansprüche

1. Hausgerät zum Trocknen von Wäsche, welches eine von Prozessluft umströmbare Wärmesenke aufweist, wobei die Wärmesenke ein Substrat aus Metall hat, welches eine der Prozessluft zugewandte Oberfläche aufweist,
**dadurch gekennzeichnet, dass** die Oberfläche eine eine Anhaftung eines Fremdpartikels vermeidende Beschichtung trägt, wobei die Beschichtung eine Oberflächenenergie von höchstens 40 mN/m aufweist, dass die Oberfläche einen von der Prozessluft direkt anströmbaren Teil aufweist, welcher von der Beschichtung vollständig bedeckt ist und wobei die beschichtete Oberfläche der Wärmesenke aus zumindest einem Werkstoff ausgewählt aus der Gruppe umfassend Kupfer, Aluminium, Eisenwerkstoffe sowie Kupferlote und Silberlote gebildet ist, und dass die Wärmesenke Kanten in dem Substrat aufweist, deren jede Kante von der Beschichtung vollständig bedeckt ist.

2. Hausgerät nach Anspruch 1, bei dem die Beschichtung eine Oberflächenenergie von höchstens 30 mN/m aufweist.

3. Hausgerät nach einem der vorigen Ansprüche, bei dem die Beschichtung ein Polysiloxanharz enthält.

4. Hausgerät nach Anspruch 3, bei dem das Polysiloxanharz ein polyestermodifiziertes Methyl-Phenyl-Polysiloxanharz ist.

5. Hausgerät nach einem der Ansprüche 3 und 4, bei dem in der Beschichtung keramische Partikel mit einer Größe von höchstens 50 nm suspendiert sind.

6. Hausgerät nach einem der Ansprüche 3 bis 5, bei dem die Beschichtung eine Dicke zwischen 1 µm und 50 µm aufweist.

7. Hausgerät nach Anspruch 6, bei dem die Beschichtung eine Dicke zwischen 1 µm und 5 µm aufweist.

8. Hausgerät nach einem der Ansprüche 3 bis 7, bei dem in der Beschichtung ein Pigment suspendiert ist.

9. Hausgerät nach Anspruch 8, bei dem das Pigment unter Bestrahlung mit ultraviolettem Licht in sichtbarem Licht fluoresziert.

10. Hausgerät nach einem der vorigen Ansprüche, bei dem die Oberfläche vollständig von der Beschichtung bedeckt ist.

11. Hausgerät nach einem der vorigen Ansprüche, welches als Trockner für Wäsche ausgebildet ist.

12. Hausgerät nach einem der vorigen Ansprüche, bei dem die Wärmesenke ein Teil einer Wärmepumpe ist.

13. Hausgerät nach einem der Ansprüche 11 und 12, in dem die Wärmesenke unlösbar verankert ist.

## Claims

1. Household appliance for drying laundry, which has a heat sink around which process air can flow, wherein the heat sink has a substrate made of metal, which has a surface facing the process air,
**characterised in that**
the surface bears a coating preventing an adhesion of foreign particles, wherein the coating has a surface energy of at most 40 mN/m, that the surface has a part to which process air can flow directly, which part is completely covered by the coating and wherein the coated surface of the heat sink is formed from at least one material selected from the group comprising copper, aluminium, ferrous material and copper solder and silver solder, and that the heat sink has edges in the substrate, each edge of which is completely covered by the coating.

2. Household appliance according to claim 1, in which the coating has a surface energy of at most 30 mN/m.

3. Household appliance according to one of the preceding claims, in which the coating contains a polysiloxane resin.

4. Household appliance according to claim 3, in which the polysiloxane resin is a polyester-modified methyl phenyl polysiloxane resin.

5. Household appliance according to one of claims 3 and 4, in which ceramic particles with a size of at most 50 nm are suspended in the coating.

6. Household appliance according to one of claims 3 to 5, in which the coating has a thickness between 1 µm and 50 µm.

7. Household appliance according to claim 6, in which the coating has a thickness between 1 µm and 5 µm.

8. Household appliance according to one of claims 3 to 7, in which a pigment is suspended in the coating.

9. Household appliance according to claim 8, in which the pigment fluoresces in visible light when irradiated with ultraviolet light.

10. Household appliance according to one of the preceding claims, in which the surface is completely covered by the coating.

11. Household appliance according to one of the preceding claims, which is embodied as a dryer for laundry.

12. Household appliance according to one of the preceding claims, in which the heat sink is part of a heat pump.

13. Household appliance according to one of claims 11 to 12, in which the heat sink can be anchored in a non-detachable fashion.

## Revendications

1. Appareil ménager pour le séchage du linge, qui comprend un puits de chaleur autour duquel de l'air de traitement peut circuler, dans lequel le puits de chaleur possède un substrat en métal qui comprend une surface tournée vers l'air de traitement, **caractérisé en ce que** la surface porte un revêtement empêchant une adhésion de particules étrangères, dans lequel le revêtement a une énergie de surface au maximum de 40 mN/m,
**en ce que** la surface comprend une partie pouvant être parcourue directement par l'air de traitement qui est recouverte entièrement par le revêtement et dans lequel la surface revêtue du puits de chaleur est constituée d'au moins un matériau choisi dans le groupe comprenant du cuivre, de l'aluminium, des matériaux ferreux, des alliages de cuivre et des alliages d'argent, et
**en ce que** le puits de chaleur comprend des bords dans le substrat qui sont chacun entièrement recouverts par le revêtement.

2. Appareil ménager selon la revendication 1, dans lequel le revêtement a une énergie de surface au maximum de 30 mN/m.

3. Appareil ménager selon l'une des revendications précédentes, dans lequel le revêtement contient une résine de polysiloxane.

4. Appareil ménager selon la revendication 3, dans lequel la résine de polysiloxane est une résine de méthyl-phényl-polysiloxane modifiée par un polyester.

5. Appareil ménager selon l'une des revendications 3 et 4, dans lequel des particules céramiques d'une taille au maximum de 50 nm sont mises en suspension dans le revêtement.

6. Appareil ménager selon l'une des revendications 3 à 5, dans lequel le revêtement a une épaisseur entre 1 µm et 50 µm.

7. Appareil ménager selon la revendication 6, dans lequel le revêtement a une épaisseur entre 1 µm et 5 µm.

8. Appareil ménager selon l'une des revendications 3 à 7, dans lequel un pigment est mis en suspension dans le revêtement.

9. Appareil ménager selon la revendication 8, dans lequel le pigment fluoresce dans la lumière visible lorsqu'il est irradié par de la lumière ultraviolette.

10. Appareil ménager selon l'une des revendications précédentes, dans lequel la surface est entièrement recouverte par le revêtement.

11. Appareil ménager selon l'une des revendications précédentes qui est configuré sous forme d'un sèche-linge.

12. Appareil ménager selon l'une des revendications précédentes, dans lequel le puits de chaleur est une partie d'une pompe à chaleur.

13. Appareil ménager selon l'une des revendications 11 et 12, dans lequel le puits de chaleur est ancré de façon inamovible.
